Europäisches Patentamt

(19) European Patent Office

Office européen des brevets

(11) Publication number: **0 028 042**
**B1**

## (12) EUROPEAN PATENT SPECIFICATION

(45) Date of publication of patent specification: **01.02.84**

(51) Int. Cl.³: **B 60 B 33/02**

(21) Application number: **80200952.2**

(22) Date of filing: **10.10.80**

(54) Castor.

(30) Priority: **29.10.79 NL 7907920**

(43) Date of publication of application:
**06.05.81 Bulletin 81/18**

(45) Publication of the grant of the patent:
**01.02.84 Bulletin 84/5**

(84) Designated Contracting States:
**BE DE FR NL SE**

(56) References cited:
**BE - A - 710 837
CH - A - 607 958
FR - A - 1 484 841
GB - A - 971 199
US - A - 2 583 858
US - A - 2 963 732
US - A - 4 028 773**

(73) Proprietor: SKF Nederland B.V.
P.O. Box 37 Wageningselaan 2
NL-3900 AA Veenendaal (NL)

(72) Inventor: Timmer, Hendrikus Jacobus María
Dr. Hoogenboomlaan 4
Tiel (NL)

(74) Representative: Merkelbach, B.
SKF Engineering & Research Centre B.V.
Kelvinbaan 16 P.O. Box 50
NL-3430 AB Nieuwegein (NL)

Courier Press, Leamington Spa, England.

The invention concerns a castor comprising a housing and a swivel member connected therewith and rotating about a vertical axis, wherein at least one wheel is seated rotating about a horizontal axis, while between the swivel member and the housing is mounted a first engaging member movable in vertical direction and connected for rotation with one of these parts, which member is pressed by a spring against the other part, which other part is provided with a second engaging member situated such that, in rotation of the swivel member and the housing with respect to one another, in a given mutual position of these parts in a preferred direction of travel of the castor, the first engaging member, owing to the pressure of the spring, engages with the second engaging member, such that further rotary motion meets some resistance, the first engaging member being provided with a V-shaped groove extending radially and the second engaging member comprising a projecting portion extending radially, which may be received by the V-shaped groove. Such a castor is disclosed in CH—A—607958.

For the sake of serviceability, transfer or equipment carts pushed or drawn by hand are often provided with four castors; on the other hand, such a cart is difficult to maneuver and it is virtually impossible to cause such a cart to travel in any given direction, as a result of which it may repeatedly be driven into obstacles. It has therefore already been proposed to provide at least one castor with a mechanism by which a preferred direction may be imparted to the castor but which does not block rotation about the vertical axis or swivel motion.

In the known castor the V-shaped groove is made in the rounded end of a plug under spring pressure, forming the first engaging member, while the second engaging member, cooperating therewith, is formed by a pin extending radially, so that in case of a rotary motion of the swivel member over 90° from the position in which the pin lies in the V-shaped groove, a counteracting torque that will swivel the swivel member back into its starting position again is exerted on the swivel member over this entire angle of swivel of 90°. However, manoeuvrability of the cart is thereby unfavourably influenced.

The object of the invention is to procure a castor of the abovementioned type which does not have this drawback. This object is accomplished in that in the castor pursuant to the invention the projecting portion has a shape complementary with the V-shaped groove and is flanked on each side by flat portions, in the preferred direction of travel, rest against flat portions of the first engaging member.

In this way, in swiveling of the swivel member out of the position in which the V-shaped groove coincides with the V-shaped elevation, the swivel motion will meet some resistance in the form of a counteracting torque over only a relatively small initial angle, until the flat portions situated at opposing sides of the V-shaped groove come into contact with the V-shaped elevation of the housing, at which moment opposing torque is no longer present; hence the function of the wheels as swivel members thus becomes fully possible, on the other hand, in the case of the preferred direction of travel, then the cooperating flat portions act to promote stability for the whole bearing structure, in this case the cart. The magnitude of the resistance depends upon the angle, the width and the length of the groove of the first member; the dimensions of the indentation or elevation of the second member and the force of the pressure of the spring. This resistance is barely perceptible at the side where the cart is pushed or pulled, since the forces exerted on the cart at this side are transmitted directly to the swivel wheels present at the side. This is the case to a much lesser extent, however, with the castors at the opposing side of the cart, as a result of which a favourable self-correcting effect is produced there, so that the cart can readily be steered.

The movable engaging member may preferably slide along at least two upright pins which are mounted on one of the aforesaid parts.

It is noted that in BE—A—710837 is disclosed a castor wherein on the housing is mounted a spring-supported spherical or ball-shaped member, part of which may lie in a recess communicating with the swivel member. Such a design, however, causes the castor to slip into the swivel position from the preferred direction of travel too easily.

The invention is described in greater detail by means of the drawing, in which

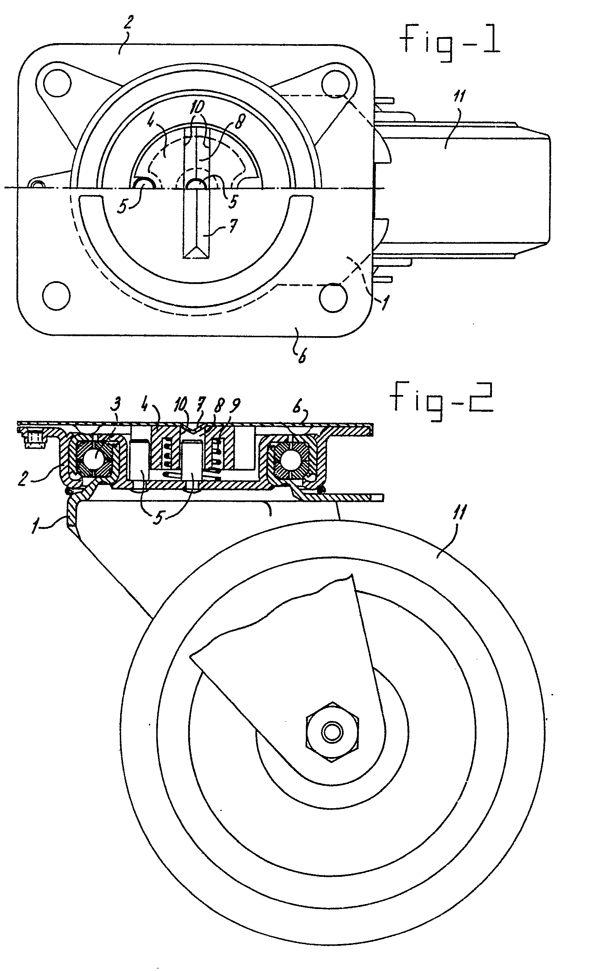

Fig. 1 shows a cross section of a castor pursuant to the invention, and

Fig. 2 represents a top view of the castor of Fig. 1 in which the cover plate has been partially removed.

As shown, the castor comprises a swivel member in the form of a swivel fork 1 and a housing 2, which two parts are connected together rotating by means of the bearing 3. In the centre of the bearing 3 is found an engaging member in the form of a plug 4, which is guided displaceably along the pins 5, which are connected fast with the swivel fork 1. The housing 2 is sealed off at the upper edge by a cover plate 6, which in the centre is provided with a V-shaped projection 7. The plug 4 has a V-shaped groove 8 at its upper edge and is held in contact with the cover plate 6 by means of the spring 9. A wheel 11 is seated on the swivel fork 1.

As shown, so long as the centre line of the elevation lies between the side edges 10 of the V-shaped groove 8 a direction-correcting effect will be exerted on the castor; there is then no or but little swiveling of the swivel fork 1. If the swivel fork 1, together with the plug 4, is swiveled further with respect to the housing 2 and the cover plate 6, the plug 4 is pressed down by the elevation 7, whereby the centre line of the elevation 7 falls outside the side edges 10 of the V-shaped groove 8, so that a self-correcting effect is no longer present and the swivel fork 1 is able to swivel unhindered.

It is pointed out, for the sake of completeness, that additional embodiments of the mechanism, in particular of the engaging member and the cover plate, are possible within the scope of the idea of the invention. Thus the engaging member 4 may be provided with a plurality of grooves 8 which, for example, are at an angle of 90° with respect to one another and as a result of which a plurality of preferred directions is obtained.

## Claims

1. Castor comprising a housing (2) and a swivel member (1) connected therewith and rotating about a vertical axis, wherein at least one wheel (11) is seated rotating about a horizontal axis, while between the swivel member and the housing is mounted a first engaging member (4) movable in vertical direction and connected for rotation with one of these parts, which member is pressed by a spring (9) against the other part, which other part is provided with a second engaging member (6) situated such that, in rotation of the swivel member and the housing with respect to one another, in a given mutual position of these parts in a preferred direction of travel of the castor, the first engaging member, owing to the pressure of the spring, engages with the second engaging member, such that further rotary motion meets some resistance, the first engaging member (4) being provided with a V-shaped groove (8) extending radially and the second engaging member (6) comprising a projecting portion (7), extending radially, which may be received by the V-shaped groove, characterized in that the projecting portion, has a shape complementary with the V-shaped groove (8) and is flanked on each side by flat portions that in the preferred direction of travel then rest against flat portions of the first engaging member (4).

2. Castor according to claim 1, characterized in that the first engaging member (4) is capable of sliding along at least two upright pins (5) which are mounted on one of the said parts.

3. Castor according to claim 1 or 2, characterized in that the first engaging member (4) is provided with a plurality of grooves (8) which lie at angles with respect to one another.

## Patentansprüche

1. Laufrolle mit einem Gehäuse (2) und einem damit verbundenen, um eine senkrechte Achse drehbaren Schwenkglied (1), worin wenigstens ein um eine horizontale Achse drehbares Rad (11) gelagert ist, wobei zwischen dem Schwenkglied und dem Gehäuse ein erstes, in senkrechter Richtung bewegliches und mit einem dieser Teile drehfest verbundenes, durch eine Feder (9) gegen das andere Teil angedrücktes Eingriffsglied (4) montiert ist, während das andere Teil mit einem darart angeordneten zweiten Eingriffsglied (6) versehen ist, daß bei Drehung des Schwenkglieds und des Gehäuses relativ zueinander in ener bestimmten Relativstellung dieser Teile, entsprechend einer bevorzugten Laufrichtung des Laufrads, das erste Eingriffsglied infolge des Federdrucks in das zweite Eingriffsglied eingreift, so daß weitere Drehbewegung auf einen gewissen Widerstand trifft, wobei das erste Eingriffsglied (4) mit einer sich radial erstreckenden, V-förmigen Nut (8) versehen ist, und das zweite Eingriffsglied (6) einen sich radial erstreckenden Vorsprung (7) aufweist, der in der V-förmigen Nut aufgenommen werden kann, dadurch gekennzeichnet, daß der Vorsprung eine zur V-förmigen Nut (8) komplementäre Form hat und sich an ihn zu beiden Seiten flache Bereiche anschließen, die bei der bevorzugten Laufrichtung an flachen Bereichen des ersten Eingriffsglieds (4) anliegen.

2. Laufrolle nach Anspruch 1, dadurch gekennzeichnet, daß das erste Eingriffsglied (4) längs wenigstens zwei aufrechten Stiften (5) verschieblich ist, die an einem der genannten Teile montiert sind.

3. Laufrolle nach Anspruch 1 oder 2, dadurch gekennzeichnet, daß das erste Eingriffsglied (4) mit einer Mehrzahl von Nuten versehen ist, die im Winkel zueinander liegen.

## Revendications

1. Roulette orientable comprenant un carter (2), une pièce pivotante (1) assemblée avec lui et tournant autour d'un axe horizontal, dans laquelle au moins une roulette (11) est supportee pour tourner autour d'un axe horizontal, tandis qu'entre la pièce pivotante et le carter, est montée une première pièce d'engagement (4) mobile dans une direction verticale et assemblée pour tourner avec l'une de ces parties, cette pièce etant poussée par un ressort (9) contre l'autre partie, cette autre partie étant prévue avec une second pièce d'engagement (10) située de maniere que, en rotation de la pièce pivotante et du carter l'un par rapport a l'autre, dans une position mutuelle donnée de ces pièces dans une direction préférée de déplacement de la roulette orientable, la première pièce d'engagement sous l'effet de la pression du ressort engage la second pièce d'engagement de manière que tout autre mouvement de rotation recontre une certaine résistance, la première pièce d'engagement (4) étant prévue avec une rainure (8) en forme de V s'etendant radialment et la seconde pièce d'engagement (6) comportant une partie en saillie (7) s'etendant radialement pouvant être reçue dans la rainure en forme de V, caractérisée en ce que la partie en saillie a une forme complémentaire de celle de rainure (8) en forme de V et est entourée de chaque côté par des parties planes, qui, dans la direction préferée de déplacement, reposent contre des parties planes de la première pièce d'engagement (4).

2. Roulette orientable selon la revendication 1, caractérisée en ce que la prémière pièce d'engagement (4) peut coulisser le long d'au moins deux goupilles verticales (5) qui sont montées sür l'une des dites parties.

3. Roulette orientable selon la revendication 1 où 2, caracterisée en ce que la prémière pièce d'engagement (4) comporte plusieurs rainures (8) qui font des angles les unes par rapport aux autres.

fig-1

fig-2